Europäisches Patentamt

(19) European Patent Office   (11) Publication number: **0 033 398**
Office européen des brevets                                **B1**

(12) **EUROPEAN PATENT SPECIFICATION**

(45) Date of publication of patent specification: **16.05.84**   (51) Int. Cl.³: **B 23 D 71/00,** A 01 L 15/00,
                                                                **B 23 D 67/06**

(21) Application number: **80200094.3**

(22) Date of filing: **01.02.80**

(54) **Rasp.**

(43) Date of publication of application:
**12.08.81 Bulletin 81/32**

(45) Publication of the grant of the patent:
**16.05.84 Bulletin 84/20**

(84) Designated Contracting States:
**AT BE CH DE FR GB IT LU NL SE**

(56) References cited:
**DE-A-1 678 588**
**DE-A-2 408 844**
**FR-A-1 218 804**
**US-A-2 769 225**

(73) Proprietor: **Wopereis, Johannes Antonius Maria**
**Rector Hulshofstraat 10 a**
**NL-7135 JV Harreveld (NL)**

(72) Inventor: **Wopereis, Johannes Antonius Maria**
**Rector Hulshofstraat 10 a**
**NL-7135 JV Harreveld (NL)**

(74) Representative: **Urbanus, Henricus Maria, Ir.**
**c/o Vereenigde Octrooibureaux Nieuwe**
**Parklaan 107**
**NL-2587 BP 's-Gravenhage (NL)**

Courier Press, Leamington Spa, England.

EP 0 033 398 B1

# Description

This invention relates to a rotary, self-cleaning disk-type rasp, in particular for tending the claws of animals, provided with a planar body in the form of an annular disk having a working surface and a central aperture for being secured to an electric hand tool, the disk having a plurality of holes therethrough and arranged in such a manner that when the disk rotates the paths of movement of the holes overlap radially, there being provided cutting means at all, or substantially all said holes, said cutting means having a working edge projecting from said working surface, the projection of said working edge on said working surface falling within the relevant hole edge, a plurality of holes being arranged adjacent the circumference of the disk, but so that the circumferential edge of the working surface is smooth.

Such a rasp is known from the German Offenlegungsschrift 2.408.844. It has appeared that this known rasp, due to wear and bend does not meet the requirements. Due to an easy bending of this known rasp, a claw or hoof cannot be fully processed, i.e. ground flat and also, if desired, in concave form.

It is an object of the present invention to remove these disadvantages.

According to the invention the said rasp is characterized in that the cutting means are separate cutters of tungsten carbide and the annular disk is of relatively thick material to provide rigidity and the holes are spaced apart a distance no greater than three times the hole diameter.

One embodiment of the disk-type rasp, will now be described, by way of example, with reference to the accompanying drawings, in which

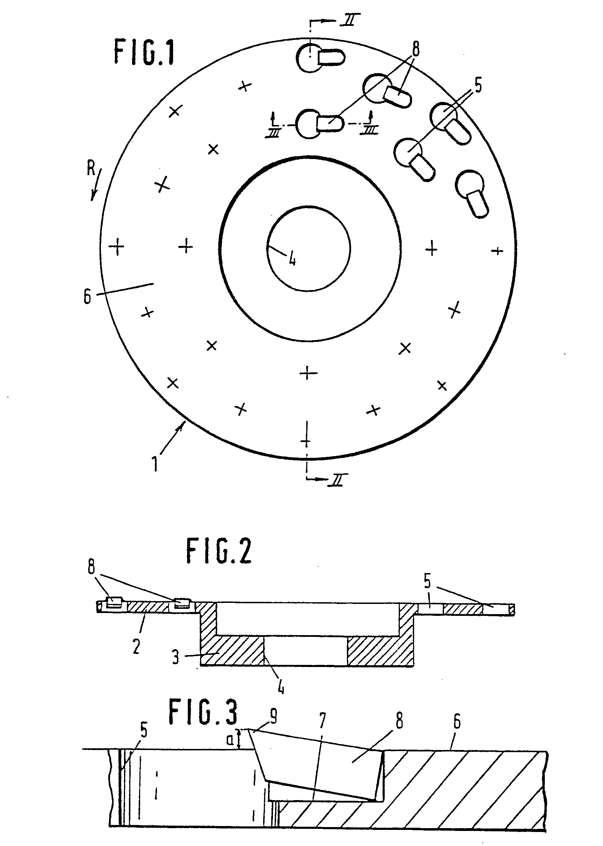

Figure 1 is a plan view of the working surface of the rasp;

Figure 2 is an axial sectional view of the rasp, taken on the line II—II of Figure 1; and

Figure 3 shows a detail in sectional view, taken on the line III—III of Figure 1.

As shown in the drawings, the disk-type rasp 1 has a body 2 in the form of a rigid, planar, annular disk having a recess 3 in the centre with a central aperture 4 for securing the rasp as an attachment to an electric hand tool not shown. The direction of rotation is shown by an arrow R.

Formed in disk 2 are a plurality of holes 5 with cutters 8 counter-sunk in appropriate recesses 7 and, for example, fixed by soldering, on the side of working surface 6. Cutters 8 have a working or cutting edge 9 located a distance *a* above working surface 6, and are placed so that the projection of their working edge 9 on the working surface of the disk falls within the relevant hole edge, and chips removed by the cutting edge 9 can be directly discharged through the associated hole 5.

Taking into account the direction of rotation R, the cutters are disposed in a trailing position relative to holes 5. The holes are distributed over the entire radial width of the annular disk, even close to its outer circumference, but so that the circumferential edge of the disk is not interrupted. The holes are spaced apart a distance no greater than thrice their diameter, and are arranged in such a pattern that during rotation of disk 1 their paths of movement overlap radially, so that virtually the entire working surface 6 is covered.

When the rasp is used as a claw tending tool, excellent results are obtained with the following parameters:

| | |
|---|---|
| disk diameter | approx. 11 cm |
| number of holes | approx. 24 |
| hole diameter | approx. 8 mm |
| distance *a* | approx. 1.5 mm |
| speed | 7800—10,000 rpm. |

## Claim

A rotary, self cleaning disk-type rasp, in particular for tending the claws of animals, provided with a planar body in the form of an annular disk (2) having a working surface (6) and a central aperture (4) for being secured to an electric hand tool the disk (2) having a plurality of holes (5) therethrough, and arranged in such a manner that when the disk (2) rotates the paths of movement of the holes (5) overlap radially, there being provided cutting means (8) at all, or substantially all said holes (5), said cutting means (8) having a working edge (9) projecting from said working surface, the projection of said working edge (9) on said working surface (6) falling within the relevant hole (5) edge, a plurality of holes (5) being arranged adjacent the circumference of the disk, but so that the circumferential edge of the working surface (6) is smooth, characterized in that the cutting means are, separate cutters (8) of tungsten carbide and the annular disk is of relatively thick material to provide rigidity and the holes are spaced apart a distance no greater than three times the hole diameter.

## Patentanspruch

Raspelscheibe (2) insbesondere zum Behandeln von Tiernägeln und -krallen aus einer ebenen Platte mit einer Arbeitsfläche (6), einer zentrischen Öffnung (4) zum Verbinden mit einem elektrischen Handwerkzeug sowie zum Teil nahe dem Scheibenrand angeordneten, dort jedoch einen glatten Randstreifen belassenden Öffnungen (5), deren Bahnen sich beim Drehen der Scheibe radial überlappen, und in im wesentlichen allen Öffnungen angeordneten Schneidmitteln (8), deren Schneidkanten (9) die Arbeitsfläche überragen und in der Projektion innerhalb der zugehörigen Öffnung liegen, dadurch gekennzeichnet, dass separate Schneidkörper aus Wolframkarbid in eine verhältnismässig dicke, demgemäss steife Scheibe eingesetzt sind und der Abstand zwischen den Öffnungen das Dreifache des Öffnungsdurchmessers nicht übersteigt.

**Revendication**

Râpe rotative auto-nettoyante du type à disque, en particulier pour le toilettage des griffes d'animaux, équipée d'un corps plat en forme de disque annulaire (2) possédant une surface de travail (6) et une ouverture centrale (4) permettant sa fixation à un outil électrique manuel, le disque (2) possédant une pluralité de trous (5) le traversant et disposés de telle manière que lorsque le disque (2) tourne, les trajectoires de déplacement des trous (5) se recouvrent radialement, tandis qu'il est prévu des moyens de coupe (8) au niveau de l'ensemble ou sensiblement de l'ensemble desdits trous (5), lesdits moyens de coupe (8) comportant une arête de travail (9) faisant saillie à partir de ladite surface de travail, la partie saillante de ladite arête de travail (9) au-dessus de ladite surface de travail (6) tombant à l'intérieur du bord du trou associé (5), une pluralité de trous (5) étant disposés au voisinage du pourtour du disque, mais de telle sorte que le bord circonférentiel de la surface de travail (10) est lisse, caractérisée en ce que les moyens de coupe sont des couteaux séparés (8) en carbure de tungstène et que le disque annulaire est constitué en un matériau relativement épais de manière à fournir une rigidité et que les trous sont espacés d'une distance non supérieure au triple de leur diamètre.

FIG.1

FIG.2

FIG.3